# EUROPÄISCHE PATENTSCHRIFT

(11) **EP 3 204 179 B1**
(45) Veröffentlichungstag und Bekanntmachung des Hinweises auf die Patenterteilung: **05.01.2022**
(21) Anmeldenummer: 15749761.1
(22) Anmeldetag: 03.08.2015
(51) Int. Cl.: B23B 31/117, B23B 31/02, B23Q 11/10

(54) **WERKZEUGHALTER MIT FLUIDZUFUHR**
TOOL HOLDER WITH FLUID SUPPLY
PORTE-OUTIL COMPRENANT UNE AMENÉE DE FLUIDE

(30) Priorität: 07.10.2014 DE 202014104802 U; 21.10.2014 US 201462066539 P
(43) Veröffentlichungstag der Anmeldung: 16.08.2017
(73) Patentinhaber: Bilz Werkzeugfabrik GmbH & Co. KG, 73760 Ostfildern (DE)
(72) Erfinder: BABEL, Gerhard, 73666 Baltmannsweiler (DE); ZIERER, Ulrich, 72762 Reutlingen (DE)
(74) Vertreter: Witte, Weller & Partner Patentanwälte mbB
(86) Internationale Anmeldenummer: PCT/EP2015/067818
(87) Internationale Veröffentlichungsnummer: WO 2016/055187

(56) Entgegenhaltungen:
- EP-A1- 0 799 670
- EP-A1- 2 343 144
- DE-A1- 3 319 618
- JP-A- H08 118 119
- JP-A- H08 118 119
- JP-A- H10 138 024
- JP-A- 2002 346 864
- US-A1- 2012 074 655

## Beschreibung

Die Erfindung betrifft einen Werkzeughalter zur Aufnahme eines Werkzeuges mit seinem Werkzeugschaft, mit einer Aufnahmebohrung zur Aufnahme des Werkzeugschaftes in einer vorbestimmten Axiallage, mit einer Dichtung am inneren Ende der Aufnahmebohrung, und mit einer maschinenseitigen Kühlmittelzufuhr in eine Bohrung des Werkzeugschaftes, wobei die Dichtung in Form eines Stopfens mit einem zentralen Kühlmitteldurchlass ausgebildet ist, der in einer vorbestimmten Einbaulage am Ende der Aufnahmebohrung gehalten ist und an seinem dem Werkzeugschaft zugewandten Ende ein nach außen hervorstehendes, zumindest teilweise elastisch verformbares Dichtungselement aufweist, das zumindest eine Dichtlippe aufweist, die in einen Freistich am Ende der Aufnahmebohrung hervorsteht.

Ein derartiger Stand der Technik ist aus der EP 2 343 144 A1 bekannt.

Bei einem weiteren aus der der WO 2005/037484 A2 bekannten Stand der Technik weist ein Werkzeughalter zur Aufnahme eines Werkzeuges mit seinem Werkzeugschaft in der Aufnahmebohrung, in der der Werkzeugschaft gehaltert ist, eine Dichtung in Form einer Einstellschraube auf, mit der die axiale Position des Werkzeugschaftes feinjustierbar ist. Laut der DIN 69090-3 ist hierzu an der Einstellschraube eine Dichtfläche zum Werkzeug hin vorgesehen, der eine entsprechende Gegenfläche am Werkzeugschaft zugeordnet ist, so dass eine metallische Dichtung realisiert wird. Eine solche Dichtung ist allerdings nur dann wirksam, wenn die Einstellschraube mit ausreichend hohem Druck an das Werkzeug angepresst wird. Ist der Anpressdruck unzureichend, so entsteht an der Verbindung zwischen der Einstellschraube und dem Werkzeug eine undichte Stelle, an der das Kühlmedium in den Werkzeughalter austritt und nicht mehr oder unzureichend in die Bohrung des Werkzeugschaftes geleitet wird.

Derartige Werkzeughalter mit einer inneren Durchleitung für das Kühlmittel werden für eine sog. Minimalmengenschmierung MMS (oder englisch Minimum Quantity Lubrification MQL) verwendet. Hierbei wird das Kühlmittel durch den Werkzeughalter und die zugeordnete Bohrung im Werkzeugschaft unmittelbar bis zur Arbeitsstelle geführt, um eine wirkungsvolle Kühlung bzw. Schmierung an der Arbeitsstelle zu bewirken.

Auch wenn im Zuge dieser Anmeldung lediglich von "Kühlmittel" die Rede ist, so wird hierunter ganz allgemein jegliches Kühl- bzw. Schmiermittel in flüssiger, gasförmiger oder Mischform, insbesondere eines Aerosols, verstanden.

Wichtig für eine korrekte Funktion der Minimalmengenschmierung MMS ist die Qualität der Dichtung zwischen dem Werkzeugschaft und der Einstellschraube, da im Falle einer Leckage keine ausreichende Kühlmittelzufuhr zum Werkzeug gewährleistet ist.

Da das Werkzeug in der Aufnahmebohrung des Werkzeughalters in der Regel kraftschlüssig fixiert wird, beispielsweise durch thermisches Schrumpfen, muss entweder bereits beim Einschrumpfen die vorbestimmte Axiallage des Werkzeugschaftes korrekt eingebracht werden oder aber anschließend durch Einstellen der Stellschraube auf das Längen-Sollmaß eingestellt werden.

Hierbei ist allerdings der notwendige Anpressdruck zwischen der Dichtfläche der Einstellschraube und dem Werkzeugschaft kritisch und hängt teilweise von der Fähigkeit des Monteurs bei der Werkzeugmontage ab.

In der Praxis gibt es daher immer wieder unzureichend abgedichtete Werkzeuge oder längenmäßig nicht korrekt justierte Werkzeuge.

Vor diesem Hintergrund liegt der Erfindung die Aufgabe zugrunde, einen Werkzeughalter zu schaffen, der für Minimalmengenschmierung geeignet ist und mit dem in jedem Falle eine sichere Abdichtung an der Übergangsstelle zwischen Werkzeughalter und Werkzeugschaft am inneren Ende der Aufnahmebohrung gewährleistet ist. Hierbei soll eine möglichst fehlertolerante Aufnahme gewährleistet sein..

Diese Aufgabe wird erfindungsgemäß durch einen Werkzeughalter gemäß Anspruch 1 gelöst.

Die Aufgabe der Erfindung wird auf diese Weise vollkommen gelöst.

Infolge der Dichtlippe, die zur Anlage an der Schulter der Aufnahmebohrung ausgebildet ist, wird auch schon bei geringem Anpressdruck eine sichere Abdichtung gewährleistet. Auf diese Weise ist das System deutlich toleranter gegen Veränderungen des Anpressdrucks, als dies bei herkömmlichen Werkzeughaltern der Fall ist. Schon ein geringer Anpressdruck reicht aus, um eine sichere Abdichtung zu gewährleisten.

Wenn etwa der Werkzeugschaft in die Aufnahmebohrung thermisch eingeschrumpft wird, wie etwa aus der EP 0 830 917 A1 bekannt, die hier vollständig durch Bezugnahme eingeschlossen wird, so reicht der Anpressdruck, der sich durch das Herunterfallen des Werkzeugs in die thermisch aufgeweitete Aufnahmebohrung unter Schwerkrafteinfluss ergibt, völlig aus, um eine sichere Abdichtung zu gewährleisten.

Die Dichtung ist in Form eines Stopfens mit einem zentralen Kühlmitteldurchlass ausgebildet, der in einer vorbestimmten Einbaulage am Ende der Aufnahmebohrung gehalten ist.

Auf diese Weise kann der Stopfen vor dem Einbringen des Werkzeugschaftes in die Aufnahmebohrung auf die gewünschte axiale Einbaulage eingestellt werden, so dass nach dem Einspannen des Werkzeugschaftes, etwa durch thermisches Schrumpfen, sowohl die gewünschte Axiallage des Werkzeugschaftes als auch eine zuverlässige Abdichtung gewährleistet ist.

Gemäß einer weiteren Ausgestaltung der Erfindung ist der Stopfen mittels eines Außengewindes in einem Innengewinde des Werkzeughalters verstellbar gehalten.

Dies erleichtert eine Einstellmöglichkeit für eine vorbestimmte axiale Einbaulage des Werkzeugschaftes.

Der Stopfen weist an seinem dem Werkzeugschaft zugewandten Ende ein nach außen hervorstehendes Dichtungselement auf.

Hierdurch ist die gewünschte Elastizität der Dichtung zur Abdichtung mit dem Werkzeugschaft schon bei sehr geringem Anpressdruck gewährleistet.

In bevorzugter Weiterbildung der Erfindung besteht das zumindest teilweise elastisch verformbare Dichtungselement aus einem elastomeren Kunststoffmaterial.

Hierdurch ergibt sich eine besonders hohe Elastizität und eine besonders gute Abdichtung mit dem Werkzeugschaft schon bei sehr geringem Anpressdruck.

Es versteht sich, dass das elastomere Kunststoffmaterial ausreichend thermisch beständig sein muss, um etwaigen thermischen Beanspruchungen insbesondere bei einem thermischen Einschrumpfen des Werkzeugschaftes zu widerstehen. Es versteht sich ferner, dass der Begriff "elastomeres Kunststoffmaterial" jegliches Kunststoffmaterial umfasst, das ein zumindest teilweise reversibles elastisches Verhalten aufweist, wobei auch Kautschuk- und kautschukähnliche Materialien mit umfasst sind.

Beispielsweise kann das elastisch verformbare Dichtungselement aus Fluorkautschuk bestehen.

Gemäß einer weiteren Ausgestaltung der Erfindung besteht der gesamte Stopfen aus dem elastomeren Kunststoffmaterial.

Dies ermöglicht eine einfache und kostengünstige Herstellung.

Gemäß einer weiteren Variante der Erfindung weist der Stopfen einen Basiskörper aus einem Metall auf, der als Schraube mit einem Außengewinde ausgebildet ist, an dessen dem Werkzeugschaft zugewandten Ende das zumindest teilweise elastisch verformbare Dichtungselement aus einem elastomeren Kunststoffmaterial aufgenommen ist.

Zwar führt diese Ausgestaltung der Dichtung in Form eines Metall-Kunststoff-Verbundteils zu leicht erhöhten Herstellkosten für die Dichtung, jedoch ergibt sich der besondere Vorteil einer Einstellmöglichkeit für die Axiallage des Werkzeughalterschaftes bei einer gleichzeitigen Toleranz der Wirksamkeit der Dichtung gegenüber Veränderungen der Axiallage.

Gemäß einer weiteren Ausgestaltung der Erfindung weist das zumindest teilweise elastisch verformbare Dichtungselement ein Metall auf, das vorzugsweise mit einer Beschichtung aus einem Kunststoff versehen ist.

Auf diese Weise kann eine höhere Toleranz der Dichtungswirkung gegen einen erhöhten Anpressdruck gewährleistet werden. [0032] Gemäß einer weiteren Ausgestaltung der Erfindung weist das Dichtungselement zwei Dichtlippen auf, die in den Freistich hinein hervorstehen.

Hierdurch wird die Wirkung der Dichtung noch weiter verbessert.

In weiterer Ausgestaltung der Erfindung weist das Dichtungselement eine zweite Dichtlippe zur Abdichtung mit einem Ende des Werkzeugschaftes auf.

Vorzugsweise hängen die beiden Dichtlippen über eine konkave Ringnut miteinander zusammen.

Durch diese Maßnahmen wird die Wirksamkeit der Dichtung noch weiter verbessert.

In bevorzugter Weiterbildung der Erfindung weist der Stopfen an seinem dem Werkzeugschaft zugewandten ersten Ende eine erste Werkzeugaufnahme zum Ansatz eines Schraubwerkzeuges auf.

Dies ermöglicht es, den Stopfen von der Werkzeugseite her in die Aufnahmebohrung einzuschrauben.

In weiterer Ausgestaltung der Erfindung weist der Stopfen an seinem zweiten maschinenseitigen Ende eine zweite Werkzeugaufnahme zum Ansatz eines Schraubwerkzeuges auf.

Hierdurch ist nach dem Einspannen eines Werkzeuges mit seinem Werkzeugschaft in der Aufnahmebohrung eine Verstellung des Stopfens ermöglicht, etwa um die axiale Lage des Werkzeuges zu justieren.

Gemäß einer weiteren Ausführung der Erfindung ist eine maschinenseitige Kühlmittelzufuhr in eine Bohrung des Werkzeugschaftes mittels einer Kühlmittellanze vorgesehen, die gegenüber dem Werkzeughalterkörper abgedichtet ist, wobei der Werkzeughalterkörper an der Aufnahmebohrung eine von außen zugängliche Kontrollbohrung zur Detektion einer Leckage aufweist.

Über die von außen zugängliche Kontrollbohrung, die mit der Aufnahmebohrung kommuniziert, kann hierbei auf einfache Weise detektiert werden, ob die Dichtung zwischen der Kühlmittelzufuhr und dem Werkzeugschaft vollständig dicht ist oder ob hier Kühlmittel austreten kann.

Vorzugsweise mündet die Kontrollbohrung im Bereich eines Freistiches, der zur Aufnahme einer axialen Einstellschraube nach DIN 69090-3 vorgesehen ist.

Ist die Abdichtung durch die Dichtung zwischen der Einstellschraube und dem axialen Ende des Werkzeugschaftes intakt, so tritt keinerlei Kühlmittel in den Freistich aus. Gibt es hier jedoch eine gewisse Leckage, so gelangt Kühlmittel in den durch den Freistich gebildeten Hohlraum und von dort in die Kontrollbohrung.

In zweckmäßiger Weiterbildung der Erfindung ist an der Kontrollbohrung ein Sensor vorgesehen, so dass eine Leckage unmittelbar detektiert werden kann und beispielsweise zur Ausgabe eines Warnsignals genutzt werden kann.

Wie vorstehend bereits erwähnt, ist der Werkzeughalter vorzugsweise für eine Aufnahme des Werkzeuges im Schrumpfsitz ausgebildet.

Zur Erleichterung des Einbaus des Stopfens in die Aufnahmebohrung des Werkzeughalters hat es sich als zweckmäßig erwiesen, ein Einführwerkzeug zu verwenden, das an seinem äußeren Ende einen Schraubendreheransatz aufweist, mittels dessen der Stopfen in ein Gewinde des Werkzeughalters eingeschraubt werden kann.

In bevorzugter Weiterbildung dieser Ausführung ist am Einführwerkzeug ein Kontrollmerkmal zur Festlegung der axialen Einbaulage des Stopfens vorgesehen.

Es kann sich hierbei beispielsweise um einen Absatz, eine Schulter oder dgl. handeln, womit in Verbindung mit einem bestimmten Merkmal des Werkzeughalters, z.B. Stirnfläche des Werkzeughalters, die axiale Einbaulage des Stopfens in den Werkzeughalter genau justiert werden kann.

In zusätzlicher Weiterbildung der Erfindung ist am Einführwerkzeug ein Zentrierdorn vorgesehen, der zum Eingriff in den Stopfen ausgebildet ist, um eine sichere Zentrierung des Stopfens zu gewährleisten.

Weitere Merkmale und Vorteile der Erfindung ergeben sich aus der nachfolgenden Beschreibung bevorzugter Ausführungsbeispiele unter Bezugnahme auf die Zeichnung. Es zeigen:
Fig. 1 einen Längsschnitt durch einen erfindungsgemäßen Werkzeughalter mit einem eingesetzten Werkzeug;
Fig. 2 eine vergrößerte Schnittdarstellung des Werkzeughalters gemäß Fig. 1 im Bereich des axialen Endes des Werkzeugschaftes und des Stopfens gemäß Fig. 1, aus dem der Aufbau der Dichtung besser ersichtlich ist;
Fig. 3 einen Längsschnitt durch den Werkzeughalter gemäß Fig. 1, jedoch mit einer geänderten Schnittebene, die durch eine Kontrollbohrung verläuft;
Fig. 4 einen Längsschnitt durch den Werkzeughalter gemäß Fig. 3, wobei zusätzlich ein Einführwerkzeug zur Montage des Stopfens dargestellt ist;
Fig. 5 eine teilweise geschnittene Seitenansicht einer alternativen Ausführungsform des Stopfens gemäß Fig. 4;
Fig. 6 eine Ansicht des Stopfens gemäß Fig. 5 von rechts und
Fig. 7 eine Ansicht des Stopfens gemäß Fig. 5 von links.

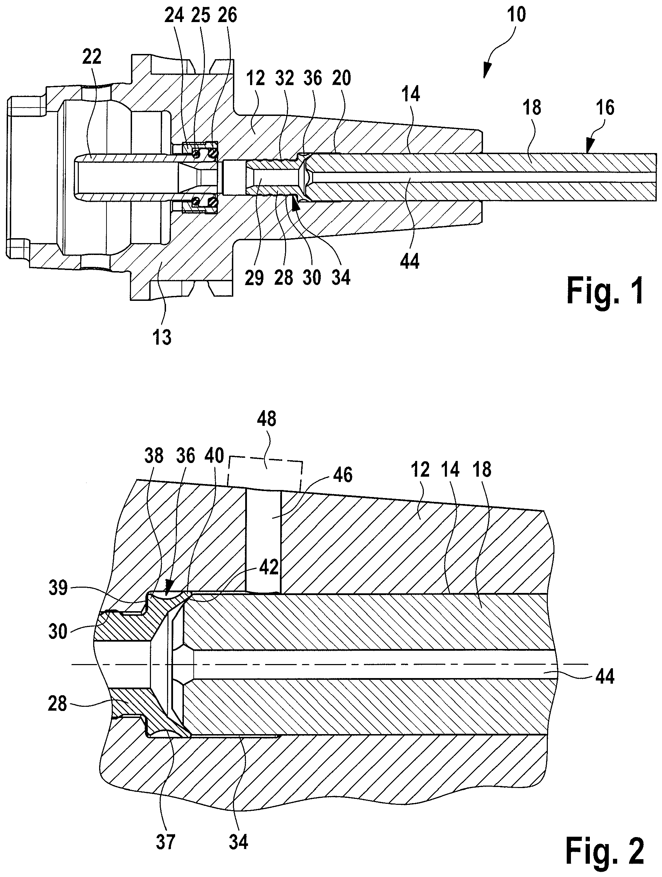

Fig. 1 zeigt einen Längsschnitt eines erfindungsgemäßen Werkzeughalters, der insgesamt mit Ziffer 10 bezeichnet ist.

Der Werkzeughalter 10 weist einen Werkzeughalterkörper 12 auf, mit einem Spannkegel auf der Werkzeugseite zur Aufnahme eines Werkzeuges 16 im thermischen Schrumpfsitz. Maschinenseitig weist der Werkzeughalter 10 in bekannter Weise einen Befestigungsabschnitt 13 mit einem Ringflansch mit Umfangsnut auf, der eine automatische Handhabung mittels eines Werkzeugwechslers oder dgl. erlaubt.

Zur Aufnahme des Werkzeuges 16 ist im Werkzeughalterkörper 12 eine Aufnahmebohrung 14 vorgesehen, die zur kraftschlüssigen Aufnahme des Werkzeugschaftes 18 in bekannter Weise durch thermisches Schrumpfen ausgebildet ist.

Angrenzend an die Aufnahmebohrung 14 ist ein Stopfen 30 aus elastomerem Kunststoffmaterial mit einem Außengewinde 30 in ein zugeordnetes Innengewinde 32 des Werkzeughalterkörpers 12 eingeschraubt. Der Stopfen 28 weist ein Dichtungselement 36 auf, das gegenüber dem übrigen Bereich des Stopfens 28 in seinem Durchmesser vergrößert ist und in das Ende der Aufnahmebohrung 14 hinein hervorsteht, wie nachfolgend noch anhand von Fig. 2 näher erläutert wird.

Der Stopfen 28 weist einen zentralen Kühlmitteldurchlass 29 auf, um den Durchtritt von maschinenseitig zugeführtem Kühlmittel in eine zentrale Bohrung 44 des Werkzeugschaftes 18 zwecks Minimalmengenschmierung zu erlauben.

Das betreffende Kühlmittel wird maschinenseitig über eine Kühlmittellanze 22 zugeführt, die mittels einer Gewindeverbindung 24 im Werkzeughalterkörper 12 eingeschraubt ist und mittels geeigneter Dichtungselemente in Form von Dichtungsringen 25, 26 gegenüber dem Werkzeughalterkörper 12 abgedichtet ist. Es ergibt sich somit eine dichte Zufuhr von Kühlmittel über die Kühlmittellanze 22 bis in den Kühlmitteldurchlass 29 des Stopfens 28.

Der Stopfen 28 ist nun erfindungsgemäß gegenüber dem axialen Ende des Werkzeugschaftes 18 abgedichtet, wie im Folgenden anhand von Fig. 2 näher erläutert wird.

Gemäß Fig. 2 sind am Dichtungselement 36 des Stopfens 28 eine erste Dichtlippe 38 und eine zweite Dichtlippe 40 ausgebildet. Die erste Dichtlippe ist zur Anlage an einer Schulter 39 der Aufnahmebohrung 14 ausgebildet, die das innere Ende der Aufnahmebohrung bildet.

Die zweite Dichtlippe 40 steht gegenüber der ersten Dichtlippe 38 in Richtung zum Werkzeugschaft 18 hervor und weist einen etwas größeren Durchmesser als die erste Dichtlippe 38 auf, so dass sich eine Anlage an der Innenfläche im Bereich eines Freistiches 34 ergibt, durch den der Durchmesser am inneren Ende der Aufnahmebohrung 14 etwas erweitert ist. Die beiden Dichtlippen 38, 40 hängen über eine konkave Ringnut 37 miteinander zusammen.

Die zweite Dichtlippe 40 ist unmittelbar zur Anlage am geneigten Ende 42 des Werkzeugschaftes 18 ausgebildet, und zwar in der Art, dass bei Andrücken des Werkzeugschaftes 18 in Richtung auf die Maschinenseite die zweite Dichtlippe 40 durch die schräge Fläche 42 des Werkzeugschaftes 14 nach außen gegen die Innenoberfläche des Freistiches 34 gepresst wird und somit die Dichtwirkung verbessert wird.

Es ergibt sich somit eine zweifache Dichtwirkung, nämlich einerseits durch Anlage der ersten Dichtlippe 38 an der Schulter 39 der Aufnahmebohrung 14 und andererseits durch Anlage der zweiten Dichtlippe 40 an der Innenoberfläche des Freistiches 34 mit zusätzlicher Anpresswirkung durch das schräge Ende 42 des Werkzeugschaftes 18.

Auf diese Weise ist schon bei geringem Anpressdruck, wie er beim thermischen Einschrumpfen des Werkzeuges 16 in den Werkzeughalter 10 entsteht, eine zuverlässige Abdichtung am Ende 42 des Werkzeugschaftes 18 gewährleistet.

In Fig. 2 ist zusätzlich eine radiale Kontrollbohrung 46 angedeutet, die in den Freistich 34 mündet. Am äußeren Ende der Kontrollbohrung ist durch eine gestrichelte Linie zusätzlich ein Sensor 48 angedeutet.

Bei intakter Dichtung durch den Stopfen 28 kann keinerlei Kühlmittel in den Bereich des Freistiches 34 austreten.

Sollte aus irgendwelchen Gründen jedoch die durch das Dichtungselement 36 gebildete Dichtung versagen, so führt dies zum Austreten von Kühlmittel in dem Bereich des Freistiches 34, so dass Kühlmittel in die Kontrollbohrung 46 gelangt und der Kühlmittelaustritt über den Sensor 28 erfasst werden kann.

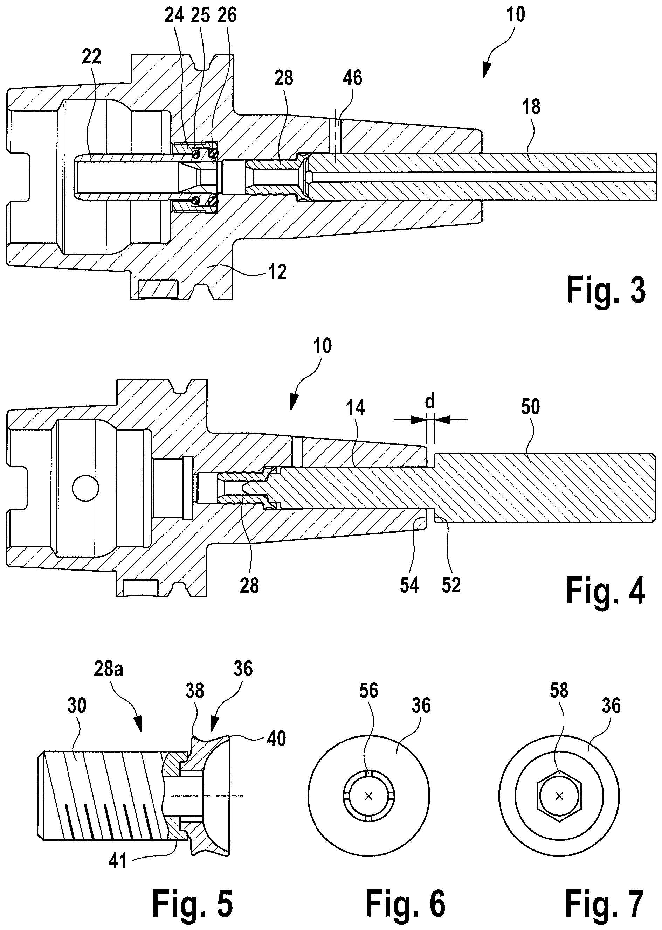

In Fig. 4 ist zusätzlich ein Einführwerkzeug 50 dargestellt, mittels dessen der Stopfen 28 mit seinem Außengewinde 30 in das zugeordnete Innengewinde 32 des Werkzeughalterkörpers 12 in eine gewünschte axiale Einbaulage eingebracht werden kann. Zur korrekten Zentrierung des Stopfens 28 dient hierbei ein Zentrierdorn 53 am vorderen Ende des Einführwerkzeuges 50, der in den zentralen Kühlmitteldurchlass 29 des Stopfens 28 eingreift.

Um eine einfache Einstellung bzw. Kontrolle der axialen Einbaulage zu gewährleisten, ist am Einführwerkzeug 50 ein Kontrollmerkmal 52 vorgesehen. Im hier dargestellten Fall ist das Kontrollmerkmal 52 durch eine Schulter des Einführwerkzeuges 50 gebildet, deren Abstand d zur Stirnfläche 54 des Werkzeughalters 10 ein Kontrollmaß ergibt. Somit kann der Stopfen leicht in eine gewünschte axiale Einbaulage justiert werden, die die spätere axiale Lage des Werkzeugschaftes 18 festlegt.

In den Fig. 5 bis 7 ist eine Variante des Stopfens dargestellt, die insgesamt mit 28a bezeichnet ist. Im Übrigen werden für entsprechende Teile entsprechende Bezugsziffern verwendet.

Der Stopfen 28a weist einen Basiskörper 41 aus Stahl mit einem Außengewinde 30 zum Einschrauben in das Innengewinde 32 des Werkzeughalterkörpers 12 auf. Am werkzeugseitigen Ende des Basiskörpers 41 ist das Dichtungselement 36 aufgenommen, das aus einem elastomeren Kunststoff, z.B. Fluorkautschuk, besteht.

In Form und Ausführung entspricht der Stopfen 28a im Übrigen vollständig dem zuvor beschriebenen Stopfen 28.

Durch die Ausführung des Stopfens 28a als Zwei-Komponenten-Bauteil ergibt sich eine spätere Einstellmöglichkeit auch nach Einschrumpfen des Werkzeugs 16 in die Aufnahmebohrung 14, wobei die Abdichtung mit dem Werkzeugende 42 über einen weiten Einstellbereich vollständig erhalten bleibt.

Die Ansicht gemäß Fig. 6 zeigt einen Werkzeugdreheransatz 56 zum Einschrauben des Stopfens 28a von der Werkzeugseite her in das Innengewinde 32 des Werkzeughalterkörpers 12.

Die Ansicht gemäß Fig. 7 zeigt auf der gegenüberliegenden Seite des Stopfens 28a einen Schraubendreheransatz 58 in Form eines Inbus, der eine nachträgliche Einstellung des Stopfens 28a auch nach einem Einschrumpfen des Werkzeugs 16 in die Aufnahmebohrung 14 ermöglicht.

## Patentansprüche

1. Werkzeughalter zur Aufnahme eines Werkzeuges (16) mit seinem Werkzeugschaft (18), mit einer Aufnahmebohrung (14) zur Aufnahme des Werkzeugschaftes (18) in einer vorbestimmten Axiallage, mit einer Dichtung (28, 28a) am inneren Ende der Aufnahmebohrung (14), mit einer maschinenseitigen Kühlmittelzufuhr in eine Bohrung (44) des Werkzeugschaftes (18), wobei die Dichtung (28, 28a) in Form eines Stopfens (28, 28a) mit einem zentralen Kühlmitteldurchlass (29) ausgebildet ist, der in einer vorbestimmten Einbaulage am Ende der Aufnahmebohrung (14) gehalten ist und an seinem dem Werkzeugschaft (18) zugewandten Ende ein nach außen hervorstehendes, zumindest teilweise elastisch verformbares Dichtungselement (36) aufweist, wobei das Dichtungselement (36) zumindest eine Dichtlippe (38, 40) aufweist, die in einen Freistich (34) am Ende der Aufnahmebohrung (14) hervorsteht, **dadurch gekennzeichnet, dass** das Dichtungselement (36) eine erste Dichtlippe (38, 40) zur Abdichtung mit einer Schulter (39) am Ende der Aufnahmebohrung (14) aufweist.

2. Werkzeughalter nach Anspruch 1, **dadurch gekennzeichnet, dass** der Stopfen (28, 28a) mittels eines Außengewindes (30) in einem Innengewinde (32) des Werkzeughalters (12) verstellbar gehalten ist.

3. Werkzeughalter nach einem der vorhergehenden Ansprüche, **dadurch gekennzeichnet, dass** das zumindest teilweise elastisch verformbare Dichtungselement (36) aus einem elastomeren Kunststoffmaterial besteht, wobei vorzugsweise der gesamte Stopfen (28) aus dem elastomeren Kunststoffmaterial besteht.

4. Werkzeughalter nach Anspruch 3, **dadurch gekennzeichnet, dass** der Stopfen (28a) einen Basiskörper (41) aus einem Metall aufweist, der als Schraube mit einem Außengewinde (30) ausgebildet ist, an dessen dem Werkzeugschaft (18) zugewandten Ende das zumindest teilweise elastisch verformbare Dichtungselement (36) aus einem elastomeren Kunststoffmaterial aufgenommen ist.

5. Werkzeughalter nach Anspruch 3, **dadurch gekennzeichnet, dass** das zumindest teilweise elastisch verformbare Dichtungselement ein Metall aufweist.

6. Werkzeughalter nach Anspruch 5, **dadurch gekennzeichnet, dass** das Dichtungselement mit einer Beschichtung aus einem Kunststoff versehen ist.

7. Werkzeughalter nach Anspruch 6, **dadurch gekennzeichnet, dass** das Dichtungselement (36) zwei Dichtlippen (38, 40) aufweist, die in den Freistich (34) hinein hervorstehen.

8. Werkzeughalter nach einem der vorhergehenden Ansprüche, **dadurch gekennzeichnet, dass** das Dichtungselement (36) eine zweite Dichtlippe (40) zur Abdichtung mit einem Ende (42) des Werkzeugschaftes (18) aufweist.

9. Werkzeughalter nach einem der vorhergehenden Ansprüche , **dadurch gekennzeichnet, dass** die beiden Dichtlippen (38, 40) über eine konkave Ringnut (37) miteinander zusammenhängen.

10. Werkzeughalter nach einem der Ansprüche 1 bis 9, **dadurch gekennzeichnet, dass** der Stopfen (28, 28a) an seinem dem Werkzeugschaft (18) zugewandten ersten Ende eine erste Werkzeugaufnahme (56) zum Ansatz eines Schraubwerkzeuges aufweist.

11. Werkzeughalter nach Anspruch 10, **dadurch gekennzeichnet, dass** der Stopfen (28, 28a) an seinem zweiten maschinenseitigen Ende eine zweite Werkzeugaufnahme (58) zum Ansatz eines Schraubwerkzeuges aufweist.

12. Werkzeughalter nach einem der vorhergehenden Ansprüche, mit einer maschinenseitigen Kühlmittelzufuhr in eine Bohrung (44) des Werkzeugschaftes (18) mittels einer Kühlmittellanze (22), die gegenüber dem Werkzeughalterkörper (12) abgedichtet ist, , **dadurch gekennzeichnet, dass** im Werkzeughalterkörper (12) an der Aufnahmebohrung (14) eine von außen zugängliche Kontrollbohrung (46) zur Detektion einer Leckage vorgesehen ist.

13. Werkzeughalter nach Anspruch 12, **dadurch gekennzeichnet, dass** die Kontrollbohrung (46) im Bereich des Freistiches (20) mündet, der zur Aufnahme einer axialen Einstellschraube nach DIN 69090-3 vorgesehen ist, wobei vorzugsweise an der Kontrollbohrung (46) ein Sensor (48) vorgesehen ist.

14. Werkzeughalter nach einem der vorhergehenden Ansprüche, **dadurch gekennzeichnet, dass** der Werkzeughalter (10) für eine Aufnahme des Werkzeugs (16) im Schrumpfsitz ausgebildet ist.

## Claims

1. A tool holder for receiving a tool (16) at its tool shaft (18), comprising a receiving bore (14) for receiving the tool shaft (18) within a predetermined axial position, further comprising a sealing (28, 28a) at the inner end of the receiving bore (14), further comprising a machine-side coolant feeding into a bore (44) of the tool shaft (18), wherein the sealing (28, 28a) is configured as a plug (28, 28a) including a central coolant passage (29) being held at the end of the receiving bore (14) in a predetermined mounting position, and at its end facing the tool shaft (18) comprises at least one at least partially elastically deformable sealing element (36), wherein the sealing element (36) comprises at least one sealing lip (38, 40) protruding into an undercut (34) at the end of the receiving bore (14), **characterized in that** the sealing element (36) comprises a first sealing lip (38, 40) for sealing against a shoulder (39) at the end of the receiving bore (14).

2. The tool holder of claim 1, **characterized in that** the plug (28, 28a) is held adjustably by means of a male thread (30) within a female thread (32) of the tool holder (12).

3. The tool holder of any of the preceding claims, **characterized in that** the at least partially elastically deformable sealing element (36) consists of an elastomeric plastic material, wherein preferably the plug (28) in total consists of an elastomeric plastic material.

4. The tool holder of claim 3, **characterized in that** the plug (28a) comprises a base body (41) made of a metal being configured as a screw having a male thread (30), at the end of which facing the tool shaft (18) there is received the at least partially elastically deformable sealing element (36) made of an elastic plastic material.

5. The tool holder of claim 3, **characterized in that** the at least partially elastically deformable sealing element comprises a metal.

6. The tool holder of claim 5, **characterized in that** the sealing element comprises a coating made of a plastic material.

7. The tool holder of claim 6, **characterized in that** the sealing element (36) comprises two sealing lips (38, 40) protruding into the undercut (34).

8. The tool holder of any of the preceding claims, **characterized in that** the sealing element (36) comprises a second sealing lip (40) for sealing with an end (42) of the tool shaft (18).

9. The tool holder of any of the preceding claims, **characterized in that** the two sealing lips (38, 40) are connected with each other by means of a concave annular groove (37).

10. The tool holder of any of claims 1 to 9, **characterized in that** the plug (28, 28a) at its first end facing the tool shaft (18) comprises a first tool receptacle (56) for receiving a screwdriver tool.

11. The tool holder of claim 10, **characterized in that** the plug (28, 28a) at its second machine-side end comprises a second tool receptacle (58) for receiving a screwdriver tool.

12. The tool holder of any of the preceding claims, comprising a machine-side coolant feed into a bore (44) of the tool shaft (18) by means of a coolant lance (22) which is sealed against the tool holder body (12), **characterized in that** within the tool holder body (12) at the receiving bore (14) there is provided a control bore (46) accessible from the outside for detecting a leakage.

13. The tool holder of claim 12, **characterized in that** the control bore (46) yields within the region of the undercut (34) which is provided for receiving an axial adjusting screw according to DIN 69090-3, wherein preferably at the control bore (46) the is provided a sensor (48).

14. The tool holder of any of the preceding claims, **characterized in that** the tool holder (10) is configured for receiving a tool (16) in shrink-fit fashion.

## Revendications

1. Porte-outil servant à la réception d'un outil (16) par sa tige d'outil (18), comportant un alésage de réception (14) servant à la réception de la tige d'outil (18) dans une position axiale prédéfinie, comportant un joint d'étanchéité (28, 28a) à l'extrémité intérieure de l'alésage de réception (14), comportant une amenée de réfrigérant côté machine dans un alésage (44) de la tige d'outil (18), le joint d'étanchéité (28, 28a) étant réalisé sous la forme d'un bouchon (28, 28a) présentant un passage de réfrigérant central (29), lequel bouchon est retenu dans une position d'installation prédéfinie à l'extrémité de l'alésage de réception (14) et comprend, à son extrémité tournée vers la tige d'outil (18), un élément d'étanchéité (36) faisant saillie vers l'extérieur et déformable élastiquement au moins partiellement, l'élément d'étanchéité (36) comprenant au moins une lèvre d'étanchéité (38, 40) qui fait saillie dans une contre-dépouille (34) à l'extrémité de l'alésage de réception (14), **caractérisé en ce que** l'élément d'étanchéité (36) comprend une première lèvre d'étanchéité (38, 40) servant à réaliser l'étanchéité avec un épaulement (39) à l'extrémité de l'alésage de réception (14).

2. Porte-outil selon la revendication 1, **caractérisé en ce que** le bouchon (28, 28a) est retenu de manière réglable, au moyen d'un filetage extérieur (30), dans un filetage intérieur (32) du porte-outil (12).

3. Porte-outil selon l'une des revendications précédentes, **caractérisé en ce que** l'élément d'étanchéité (36) déformable élastiquement au moins partiellement est constitué d'une matière synthétique élastomère, l'ensemble du bouchon (28) étant de préférence constitué de la matière synthétique élastomère.

4. Porte-outil selon la revendication 3, **caractérisé en ce que** le bouchon (28a) comprend un corps de base (41) constitué d'un métal, lequel corps de base est réalisé sous la forme d'une vis comportant un filetage extérieur (30) à l'extrémité, tournée vers la tige d'outil (18), duquel l'élément d'étanchéité (36) déformable élastiquement au moins partiellement et constitué d'une matière synthétique élastomère est reçu.

5. Porte-outil selon la revendication 3, **caractérisé en ce que** l'élément d'étanchéité déformable élastiquement au moins partiellement comprend un métal.

6. Porte-outil selon la revendication 5, **caractérisé en ce que** l'élément d'étanchéité est doté d'un revêtement constitué d'une matière synthétique.

7. Porte-outil selon la revendication 6, **caractérisé en ce que** l'élément d'étanchéité (36) comprend deux lèvres d'étanchéité (38, 40) qui font saillie dans la contre-dépouille (34).

8. Porte-outil selon l'une des revendications précédentes, **caractérisé en ce que** l'élément d'étanchéité (36) comprend une deuxième lèvre d'étanchéité (40) servant à réaliser l'étanchéité avec une extrémité (42) de la tige d'outil (18).

9. Porte-outil selon l'une des revendications précédentes, **caractérisé en ce que** les deux lèvres d'étanchéité (38, 40) sont connectées l'une à l'autre par le biais d'une rainure annulaire concave (37).

10. Porte-outil selon l'une des revendications 1 à 9, **caractérisé en ce que** le bouchon (28, 28a) comprend, à sa première extrémité tournée vers la tige d'outil (18), un premier logement d'outil (56) pour l'application d'un outil de vissage.

11. Porte-outil selon la revendication 10, **caractérisé en ce que** le bouchon (28, 28a) comprend, à sa deuxième extrémité côté machine, un deuxième logement d'outil (58) pour l'application d'un outil de vissage.

12. Porte-outil selon l'une des revendications précédentes, comportant une amenée de réfrigérant côté machine dans un alésage (44) de la tige d'outil (18) au moyen d'une lance à réfrigérant (22), qui est rendue étanche par rapport au corps de porte-outil (12), **caractérisé en ce qu'**un alésage de contrôle (46) accessible depuis l'extérieur pour la détection d'une fuite est prévu dans le corps de porte-outil (12) au niveau de l'alésage de réception (14).

13. Porte-outil selon la revendication 12, **caractérisé en ce que** l'alésage de contrôle (46) débouche dans la région de la contre-dépouille (20) qui est prévue pour la réception d'une vis de réglage axiale selon DIN 69090-3, un capteur (48) étant prévu de préférence au niveau de l'alésage de contrôle (46).

14. Porte-outil selon l'une des revendications précédentes, **caractérisé en ce que** le porte-outil (10) est réalisé pour une réception de l'outil (16) avec ajustement fretté.
